# EUROPEAN PATENT APPLICATION

(11) **EP 1 494 300 A1**
(43) Date of publication of application: **05.01.2005**
(21) Application number: 04253982.5
(22) Date of filing: 01.07.2004
(51) Int. Cl.: H01M 2/14, H01M 8/02, H01M 8/00, H01M 2/16

(54) **Porous fuel cell separator, method of manufacture thereof, and solid polymer fuel cell**

(30) Priority: 04.07.2003 JP 2003191928
(71) Applicant: NISSHINBO INDUSTRIES, INC., Chuo-ku, Tokyo (JP)
(72) Inventor: Horiuchi, Ayumi Miai Plant, Nisshinbo Ind. Inc., Okazaki-shi Aichi-ken (JP); Saito, Kazuo Miai Plant, Nisshinbo Ind. Inc., Okazaki-shi Aichi-ken (JP)
(74) Representative: Stuart, Ian Alexander

(57) **Abstract**

A porous fuel cell separator which is shaped as a porous plate composed of an electrically conductive material and a resin and which has gas flow channels on at least one surface thereof contains a far-infrared radiating material. Even when the separator is exposed to sub-freezing temperatures, the presence of the far-infrared radiating material prevents water within the pores from freezing, and can thus prevent a decline in the power generating efficiency of the fuel cell when it is restarted.

## Description

The present invention relates to porous fuel cell separators, a method of manufacturing porous fuel cell separators, and solid polymer fuel cells containing such porous fuel cell separators.

### Prior Art

Fuel cells are devices which, when supplied with a fuel such as hydrogen and with atmospheric oxygen, cause the fuel and oxygen to react electrochemically, producing water and directly generating electricity. Because fuel cells are capable of achieving a high fuel-to-energy conversion efficiency and are environmentally friendly, they are being developed for a variety of applications, including small-scale local power generation, household power generation, simple power supplies for isolated facilities such as campgrounds, mobile power supplies such as for automobiles and small boats, and power supplies for satellites and space development.

Such fuel cells, and particularly solid polymer fuel cells, are built in the form of modules composed of a stack of at least several tens of unit cells. Each unit cell has a pair of plate-like separators with raised and recessed areas on either side thereof that define a plurality of channels for the flow of gases such as hydrogen and oxygen. Disposed between the pair of separators in the unit cell are a solid polymer electrolyte membrane and gas diffusing electrodes made of carbon paper.

The role of the fuel cell separators is to confer each unit cell with electrical conductivity, to provide flow channels for the supply of fuel and air (oxygen) to the unit cells, and to serve as a separating boundary membrane. Characteristics that my be desired for the separators include high electrical conductivity, high gas impermeability, electrochemical stability and hydrophilic properties.

Fuel cell separators that are porous have recently begun to be developed and used (see Austrian Pat. No. 389,020 and U.S. Pat. No. 6,197,442.

In fuel cells which use these porous separators, water produced during power generation makes its way into the separator pores and remains within the separator even after power generation has stopped, something that rarely if ever occurs in separators having a dense construction.

Therefore, when a fuel cell used in a cold-weather region, for example, is exposed to a low-temperature (e.g., sub-freezing) environment following use, water that has infiltrated into and remains within the pores freezes, obstructing the pores. On account of such pore obstruction, when the fuel cell is restarted, the water produced during power generation collects inside the cell, markedly lowering the power generating efficiency.

Preferred embodiments of the invention may provide: (a) a porous fuel cell separator in which, even when the fuel cell is exposed to a low temperature such as a sub-freezing temperature, water that has infiltrated into and remains within the pores does not readily freeze, and which can thus help to prevent a decline in the power generating efficiency of the fuel cell when it is restarted; (b) a method of manufacturing such fuel cell separators; and (c) solid polymer fuel cells which use such fuel cell separators.

We have discovered that by including in the porous fuel cell separator a far-infrared radiating material, even when a fuel cell containing such separators is exposed to a low temperature such as a sub-freezing temperature, water that has entered and remains within the pores can be prevented from freezing, making it possible to prevent a decline in the power generating efficiency of the fuel cell when it is restarted.

Accordingly, in a first aspect, the invention provides a porous fuel cell separator that is a porous plate composed of an electrically conductive material and a resin and having channels for the flow of gases formed on at least one surface thereof, which separator contains a far-infrared radiating material.

In a second aspect, the invention provides a porous fuel cell separator that is a fired plate obtained by firing a porous plate composed of an electrically conductive material and a resin and having channels for the flow of gases formed on at least one surface thereof, which separator contains a far-infrared radiating material.

In the porous fuel cell separator of either of the two above aspects of the invention, the far-infrared radiating material is typically present on at least pore inner surfaces within the separator.

In a third aspect, the invention provides a method of manufacturing porous fuel cell separators which includes the steps of charging a raw material composition that is a mixture of an electrically conductive material, a resin and a far-infrared radiating material into a mold; and molding the composition.

In a fourth aspect, the invention provides a method of manufacturing porous fuel cell separators which includes the steps of charging a raw material composition that is a mixture of an electrically conductive material and a resin into a mold; molding the composition to form a porous plate; and impregnating the porous plate with a coating that contains a far-infrared radiating material.

In a fifth aspect, the invention provides a solid polymer fuel cell having a plurality of stacked unit cells, each unit cell being composed of a solid polymer membrane, a pair of electrodes disposed on either side of the polymer membrane, and a pair of separators disposed on either side of the pair of electrodes such as to form flow channels for supplying and removing gases. Some or all of the separators within the fuel cell are porous fuel cell separators according to the above first or second aspect of the invention.

### DETAILED DESCRIPTION OF THE INVENTION

As noted above, the porous fuel cell separator of the invention is a porous plate composed of an electrically conductive material and a resin, or a fired plate obtained by firing such a porous plate, which porous plate or fired plate has channels for the flow of gases formed on at least one surface thereof. Moreover, the inventive separator contains a far-infrared radiating material.

In the invention, any electrically conductive material ordinarily used in porous fuel cell separators may be employed without particular limitation as the electrically conductive material in the porous plate. Illustrative examples include carbonaceous materials such as natural graphite, synthetic graphite, expanded graphite, carbon black, highly conductive carbon black (Ketjenblack, available from Lion Corp.) and coke.

The resin may be suitably selected from among thermoset resins, thermoplastic resins and other resins commonly used in porous fuel cell separators. Specific examples of resins that may be used include phenolic resins, epoxy resins, unsaturated polyester resins, acrylic resins, melamine resins, polyamide resins, polyimide resins, polyamideimide resins, polyetherimide resins and phenoxy resins. If necessary, these resins may be heat treated.

The far-infrared radiating material used in the invention may be any material which has a far-infrared radiating effect. Illustrative examples include titanium oxide, silica, alumina, silicon carbide, silicon nitride, zirconia, iron oxide, manganese oxide, aluminum titanate, and mixtures thereof. The use of silica, alumina, silicon carbide, and mixtures thereof is especially preferred. Examples of such far-infrared radiating materials which are commercially available include Cerajit (available from OK Trading K.K. of Japan) and CeraHeat (available from Supply Control Co., Ltd. of Japan).

To efficiently prevent the freezing of water remaining in the separator, the content of this far-infrared radiating material in the separator, although not subject to any particular limitation, is preferably from 0.1 to 20 wt%, and more preferably from 1 to 10 wt%, of the overall separator.

The above far-infrared radiating material, so long as it forms a part of the separator, may be located anywhere within the separator. However, it is preferable for this material to be located on at least the inner surfaces of pores within the porous fuel cell separator. The presence of the far-infrared radiating material on the pore inner surfaces means that the far-infrared radiating material is located near the water remaining within the pores, thus enabling the freeze-preventing effect to be fully manifested.

In this invention, the porous plate has a porosity of preferably 1 to 50%, and more preferably 10 to 30%. At a porosity of less than 1%, the ability to absorb water produced during power generation decreases, which may lead to obstruction of the gas flow channels. On the other hand, at a porosity of more than 50%, precise formation of the channel shape is impossible, in addition to which the strength of the separator may diminish.

The pores in the porous plate have a size of preferably 0.01 to 50 µm, and more preferably 0.1 to 10 µm. At a pore size of less than 0.01 µm, permeability to the product water decreases, which may result in obstruction of the gas flow channels. On the other hand, at more than 50 µm, precise formation of the channel shape may be impossible, in addition to which the separator may have a diminished strength.

In addition to an electrically conductive material, a resin and a far-infrared radiating material, the porous fuel cell separator of the invention may contain also other additives, including various types of fibers, such as organic fibers (e.g., carbon fibers, cellulose fibers) and inorganic fibers, and inorganic fillers such as alumina, silica and silicon carbide.

Any method which is capable of incorporating the far-infrared radiating material within the separator may be employed as the method of manufacturing the above-described porous fuel cell separator containing a far-infrared radiating material, although the use of one of the methods described below is preferred.

One method of manufacture according to the present invention involves charging a raw material composition which is a mixture of the electrically conductive material, the resin and the far-infrared radiating material into a mold, then molding the composition to form a separator containing the far-infrared radiating material.

No particular limitation is imposed on the proportions in which the conductive material, the resin and the far-infrared radiating material are blended. For example, 100 parts by weight of the overall composition may be prepared by blending together 50 to 99 parts by weight, and preferably 65 to 90 parts by weight, of the conductive material; 1 to 50 parts by weight, and preferably 10 to 20 parts by weight, of the resin; and 0.1 to 20 parts by weight, and preferably 1 to 10 parts by weight, of the far-infrared radiating material.

For such reasons as enhancing strength, the raw material composition may have blended therein 1 to 20 parts by weight, and preferably 1 to 10 parts by weight, of various types of fibers, including organic fibers (e.g., carbon fibers, cellulose fibers) and inorganic fibers, and inorganic fillers such as alumina, silica and silicon carbide.

It is preferable to use the above raw material composition after it has been compounded. The compounding process is not subject to any particular limitation. For example, use can be made of a composition that has been stirred, granulated and dried by known methods. It is especially preferable to use a composition which has been screened to prevent secondary agglomeration and adjusted to a specific particle size. The composition has an average particle size which depends in part on the particle size of the electrically conductive material used, but is preferably at least 60 µm. The particle size distribution is preferably from 10 µm to 2.0 mm, more preferably from 30 µm to 1.5 mm, and most preferably from 50 µm to 1.0 mm.

Any suitable process capable of manufacturing porous plates, including compression molding, injection molding, extrusion and sheet forming, may be used without particular limitation to shape the raw material composition in a mold. Of these, compression molding is preferred because it is capable of forming uniform pores.

The pressure applied during compression molding is not subject to any particular limitation, and may be set as appropriate for the required porous plate (fuel cell separator). The molding pressure is generally from 0.098 to 19.6 MPa, preferably from 0.98 to 14.7 MPa, and most preferably from 1.96 to 9.8 MPa. At a molding pressure of less than 0.098 MPa, a strength sufficient to maintain the shape of the porous plate may not be achieved. On the other hand, at a pressure greater than 19.6 MPa, strain may arise in the molding machine and mold, possibly lowering the planar and dimensional precision of the resulting porous plate and possibly resulting in filling of the pores in the porous plate.

A second method of manufacture according to the present invention involves charging a raw material composition which is a mixture of the electrically conductive material and the resin into a mold, molding the composition to form a porous plate, and impregnating the porous plate with a coating that contains the far-infrared radiating material. By thus impregnating the porous plate with a coating which contains the far-infrared radiating material, it is possible to efficiently incorporate the far-infrared radiating material near pore surfaces within the porous plate.

In cases where a coating which contains this far-infrared radiating material is used, a method may be employed in which the porous plate is formed and subsequently fired, then the fired porous plate is impregnated with the above coating. No particular limitation is imposed on the firing temperature and time, although firing is typically carried out at 1,200 to 1,500°C, and preferably 1,200 to 1,400°C, for about 12 to 24 hours, and preferably about 12 to 18 hours.

No particular limitation is imposed on the proportions in which the conductive material and the resin are blended in the second method of manufacture. For example, 100 parts by weight of the overall composition may be prepared by blending together 50 to 99 parts by weight, and preferably 65 to 90 parts by weight, of the conductive material; and 1 to 50 parts by weight, and preferably 5 to 20 parts by weight, of the resin. Here too, the raw material composition is preferably used after being compounded in the same way as described above. If necessary, the fibers and inorganic fillers mentioned above may be blended within the raw material composition in the above-indicated proportions. The same techniques may be used to shape the composition as were mentioned above in connection with the first method of manufacture, although the use of compression molding is preferred in the second method of manufacture as well.

The far-infrared radiating material-containing coating employed in this method of manufacture may be a coating prepared by using any suitable method to mix together 20 to 99 parts by weight, and preferably 40 to 70 parts by weight, of the above-described far-infrared radiating material, with 1 to 80 parts by weight, and preferably 30 to 60 parts by weight, of a thermoset resin.

It is advantageous for this coating to be impregnated into the porous plate in an amount that furnishes 0.01 to 10 parts by weight, and preferably 0.05 to 5 parts by weight, of the far-infrared radiating material, based on the raw material composition containing the conductive material and the resin. Because the use of such a method of impregnation makes it easier to have the far-infrared radiating material present near pore surfaces within the porous plate, an effective freeze-preventing effect can be achieved with a smaller amount of the far-infrared radiating material than in the first method of manufacture.

The method of coating impregnation is not subject to any particular limitation, and can be carried out under a reduced pressure of, for example, -0.01 to -0.1 MPa.

In the above first and second methods of manufacturing porous fuel cell separators, formation of the gas flow channels may be carried out by molding the porous plate using a mold that imparts channel shapes, or by fabricating a flat plate and subsequently machining the channels into the plate. The channels may be formed on only one side of the porous plate (separator), or may be formed on both sides.

No particular limitation is imposed on the mold that is used. In general, any mold may be suitably selected according to such considerations as the shape of the channels in the porous separator from among known molds commonly used for making separators.

If necessary, the porous fuel cell separators obtained by the manufacturing methods described above can be hydrophilically treated. Such hydrophilic treatment involves treatment of the fuel cell separator with a known hydrophilic substance by a suitable technique such as impregnation, spraying or dipping. Of these treatment methods, impregnation is preferred because it enables the hydrophilic substance to better penetrate to the interior of the pores in the porous fuel cell separator. Hydrophilic treatment by impregnation is preferably carried out under a reduced pressure of -0.06 to -0.1 MPa.

Any suitable hydrophilic substance may be used in the foregoing hydrophilizing treatment. Preferred examples include Denacol EX-1310, Denacol EX-1610 and Denacol EX-861 (all available from Nagase ChemteX Corporation), Dicfine EN-0270 (available from Dainippon Ink & Chemicals, Inc.), and SR-8EG and SR-4PG (both available from Sakamoto Yakuhin Kogyo Co., Ltd.). The hydrophilic substance can be used in the above impregnation treatment in the form of an aqueous solution prepared by dissolution in water to a concentration of 0.1 to 99 wt%.

As explained above, because the porous fuel cell separator of the invention contains at the interior a far-infrared radiating material, water remaining at the interior of the pores can be prevented from freezing by the far infrared rays emitted by this material. Therefore, when a fuel cell equipped with the inventive fuel cell separator is restarted at a low temperature such as a sub-freezing temperature, the decline in power generating efficiency observed in the prior art can be prevented.

The solid polymer fuel cell of the invention contains a plurality of stacked unit cells, each unit cell being composed of a solid polymer membrane, a pair of electrodes disposed on either side of the polymer membrane, and a pair of separators disposed on either side of the pair of electrodes such as to form flow channels for supplying and removing gases. At least some of the separators within the fuel cell are the above-described porous fuel cell separators containing a far-infrared radiating material.

Here, it is desirable for "at least some" to refer specifically to 50% or more, preferably 50 to 100%, more preferably 70 to 100%, and most preferably 80 to 100%, of all the separators in the fuel cell. If fuel cell separators according to this invention account for too small a proportion of all the separators in the fuel cell, water remaining within the pores of separators that do not contain the far-infrared radiating material may freeze, possibly lowering the output of the fuel cell when it is restarted. Those separators used in the fuel cell which are not fuel cell separators according to the present invention may be separators of a type commonly employed in fuel cells.

The solid polymer electrolyte membrane may be of a type which is commonly used in solid polymer fuel cells. Illustrative examples include proton-conducting ion-exchange membranes created from fluorocarbon resins, and specifically a polytrifluorostyrene sulfonic acid or a perfluorocarbonsulfonic acid (Nafion™). The surface of the electrolyte membrane is typically coated with a paste composed of a catalyst-supporting carbon powder dispersed in an organic solvent such as a perfluorocarbonsulfonic acid-containing lower fatty alcohol-water mixed solution (Nafion 117 solution). The catalyst supported on the carbon powder is generally platinum or an alloy of platinum with another metal.

The pair of electrodes situated on either side of the solid polymer electrolyte membrane may be made of, for example, carbon paper, carbon felt, or carbon cloth woven from carbon fiber yarn.

The electrolyte membrane and electrodes are integrally united by sandwiching the electrolyte membrane between the pair of electrodes and bonding under heat (120 to 130°C) and pressure.

Alternatively, the electrolyte membrane and the pair of electrodes may be united by bonding with an adhesive.

The resulting electrode/electrolyte membrane/electrode laminate is then mounted between a pair of separators such as to form flow channels capable of supplying and removing the fuel gas, thereby forming a unit cell. Mounting may be carried out by, for example, applying an adhesive to the areas of the separator, specifically the ribs, which come into contact with the electrodes.

By using the inventive porous fuel cell separator as some (preferably at least 50%) or all of the separators in the solid polymer fuel cell of the invention, even when the fuel cell is exposed to sub-freezing temperatures while water produced during power generation remains within the separator pores, the water does not readily freeze. Hence, the power generating efficiency of the fuel cell when it is restarted can be prevented from decreasing. The solid polymer fuel cell of the invention is thus particularly suitable as a mobile power source for automobiles, small boats and the like used in cold-weather regions.

### EXAMPLES

The following examples are provided to illustrate the invention and are not intended to limit the scope thereof. Average particle sizes given below were measured using a Microtrak particle size analyzer.

### Example 1

Synthetic graphite as the electrically conductive material, phenolic resin, and a far-infrared radiating material (the far-infrared radiating ceramic CeraHeat (average particle size, 80 µm), available from Supply Control Co., Ltd. of Japan) were mixed and stirred in the proportions shown in Table 1, then granulated, dried and screened in a compounding process to form a raw material composition having a particle size distribution of 10 to 1,000 µm (average particle size, 500 µm). The composition was charged into a mold having channels formed therein, then compression molded at a surface pressure of 10 MPa and 170°C for 5 minutes, thereby forming porous fuel cell separators having raised and recessed channel features.

### Example 2

Synthetic graphite as the electrically conductive material and phenolic resin were mixed and stirred in the proportions shown in Table 1, then granulated, dried and screened in a compounding process to form a raw material composition having a particle size distribution of 10 to 1,000 µm (average particle size, 500 µm). The composition was charged into a mold having channels formed therein, then compression molded at a surface pressure of 10 MPa and 170°C for 5 minutes, thereby forming porous fuel cell separators having raised and recessed channel features.

Next, 7 parts by weight of synthetic graphite, 6 parts by weight of phenolic resin, 7 parts by weight of a far-infrared radiating material (the far-infrared radiating ceramic CeraHeat (average particle size, 0.3 µm), available from Supply Control Co., Ltd. of Japan) and 80 parts by weight of water were blended together, then charged into a ball mill and mixed for 24 hours to prepare a coating.

The porous plate fabricated above was impregnated with this coating under a reduced pressure of -0.09 MPa, following which the plate was heated at 150°C for 1 hour to cure the resin, thereby giving a fuel cell separator.

### Comparative Example 1

Aside from not using a far-infrared radiating material, a fuel cell separator was obtained in the same way as in Example 1.

**Table 1**

| | Composition (parts by weight) | | |
|---|---|---|---|
| | Synthetic graphite (average particle size, 60 µm) | Phenolic resin | Far infrared-radiating material |
| Example 1 | 78 | 12 | 10 |
| Example 2 | 88 | 12 | -- |
| Comparative Example 1 | 88 | 12 | -- |

The fuel cell separators obtained in each of the above examples were subjected to the measurement or evaluation of porosity, flexural strength, flexural modulus, specific resistance and freezing point of water. The methods used are described below, and the results are presented in Table 2.

### (1) Porosity

Measured by mercury injection porosimetry.

### (2) Flexural Strength, Flexural Modulus

Measured by the methods described in ASTM D790.

### (3) Specific Resistance

Measured by the four-probe method described in JIS H-0602.

### (4) Freezing Point of Water

Samples cut into squares 3 mm on a side were immersed in ion-exchanged water, and measurement was carried out with a differential scanning calorimeter under a nitrogen atmosphere at a cooling rate of 5°C/min.

**Table 2**

| | Fuel cell separator | | | | |
|---|---|---|---|---|---|
| | Porosity (%) | Flexural strength (MPa) | Flexural modulus (GPa) | Specific resistance (mΩ·cm) | Freezing point of water (°C) |
| Example 1 | 25 | 24 | 9 | 12 | did not freeze |
| Example 2 | 20 | 17 | 7 | 8 | did not freeze |
| Comparative Example 1 | 23 | 17 | 7 | 8 | -5 |

As is apparent from the results in Table 2, the fuel cell separators obtained in Examples 1 and 2 according to the invention contained a far-infrared radiating material and thus prevented water which had infiltrated into the separator from freezing, as occurred in Comparative Example 1. Moreover, these separators also had a good strength and electrical conductivity.

Accordingly, the porous fuel cell separators of the invention, even when exposed to a low temperature such as a sub-freezing temperature, are able to prevent water which has infiltrated into and remains within the pores from freezing, and are thus capable of preventing a decline in the power generating efficiency of the fuel cell when it is restarted.

## Claims

1. A porous fuel cell separator comprising a porous plate which is composed of an electrically conductive material and a resin and which has channels for the flow of gases formed on at least one surface thereof,
wherein the separator contains a far-infrared radiating material.

2. A porous fuel cell separator comprising a fired plate which is obtained by firing a porous plate composed of an electrically conductive material and a resin and which has channels for the flow of gases formed on at least one surface thereof,
wherein the separator contains a far-infrared radiating material.

3. The porous fuel cell separator of claim 1 or 2, wherein the far-infrared radiating material is present on at least pore inner surfaces within the porous fuel cell separator.

4. A method of manufacturing porous fuel cell separators, comprising the steps of:
(a) charging a raw material composition that is a mixture of an electrically conductive material, a resin and a far-infrared radiating material into a mold, and
(b) molding the composition.

5. A method of manufacturing porous fuel cell separators, comprising the steps of:
(a) charging a raw material composition that is a mixture of an electrically conductive material and a resin into a mold,
(b) molding the composition to form a porous plate, and
(c) impregnating the porous plate with a coating that contains a far-infrared radiating material.

6. A solid polymer fuel cell comprising a plurality of stacked unit cells, each unit cell being composed of a solid polymer membrane, a pair of electrodes disposed on either side of the polymer membrane, and a pair of separators disposed on either side of the pair of electrodes such as to form flow channels for supplying and removing gases;
wherein at least some of the separators within the fuel cell are porous fuel cell separators according to any one of claims 1 to 3.
